# EUROPEAN PATENT APPLICATION

(11) **EP 4 726 075 A1**
(43) Date of publication of application: **15.04.2026**
(21) Application number: 24205764.4
(22) Date of filing: 10.10.2024
(51) Int. Cl.: C25B 1/04, C25B 9/23, C25B 11/032, C25B 11/052, C25B 11/077, C25B 11/081

(54) **CATALYSTS FOR ELECTROLYSIS**

(71) Applicant: Shell Internationale Research Maatschappij B.V., 2596 HR The Hague (NL)
(72) Inventor: MAMTANI, Kuldeep, 562149 Kamataka (IN); SADASIVAN, Sajanikumari, 562149 Kamataka (IN); THUNDIYIL, Shibin, 562149 Karnataka (IN); RAMANAN, Sankara Narayanan, 600100 Chennai (IN); CHAUDHARI, Harshal, 562149 Karnataka (IN)
(74) Representative: Shell Legal Services IP

(57) **Abstract**

The invention provides an anode catalyst for electrolysis, in particular for (PEM)-based water electrolysis. The catalyst is a ruthenium oxide catalyst doped with one or more metals, having the general formula RuₐM₁₋ₐOₓ, wherein:
M is one or more metal dopant;
a is a number from 0.5 to 0.85; and
Oₓ indicates an oxide of any possible ratio relative to the ruthenium and metal dopants.

## Description

### Field of the Invention

This invention relates to catalysts for hydrogen production via proton exchange membrane (PEM)-based water electrolysis.

### Background of the Invention

Proton exchange membrane (PEM)-based water electrolysis is a common method of producing hydrogen. However, there are significant upfront costs associated with producing hydrogen in this way. Electrolysers comprise an anode and a cathode separated by a membrane (typically a Nafion^{®} membrane). Catalysts are present at both the anode and cathode to catalyse the anodic reaction (also called the oxygen evolution reaction or OER) and the cathodic reaction (also called the hydrogen evolution reaction or HER) respectively. Approximately 24% of the electrolyser capital cost can be attributed to the catalysts and the membrane. Therefore, there is a need to produce membranes and catalysts that are most cost effective without sacrificing operating efficiency.

The oxygen evolution reaction (OER) suffers from sluggish kinetics which necessitates high catalyst loadings at the anode. A common anode catalyst for an electrolyser is IrO₂. Not only is iridium expensive, but it is also a rare metal. Consequently, in addition to the cost constraints, there are supply chain concerns for large-scale commercialisation of electrolysers requiring iridium-based catalysts. As such, there is a particular need to develop OER catalysts that comprise significantly less iridium, for example iridium-free OER catalysts.

Ruthenium is a potential alternative to iridium in anode catalysts. Ruthenium is much more abundant and significantly less expensive than iridium. Ruthenium is also intrinsically more active than iridium. However, there are also a number of problems associated with ruthenium-based catalysts. For example, ruthenium typically suffers from rapid deactivation under the acidic conditions at the anode of a PEM electrolyser.

Therefore, there is a need to produce more cost-effective and efficient catalysts that do not deactivate under the acidic conditions at the anode of a PEM electrolyser. These and other objectives will become apparent from the disclosure provided herein.

### Summary of the Invention

In a first aspect, the present invention provides a ruthenium oxide catalyst doped with one or more metals, having the general formula RuₐM₁₋ₐOₓ, wherein:
M is one or more metal dopant;
a is a number from 0.5 to 0.85; and
Oₓ indicates an oxide of any possible ratio relative to the ruthenium and metal dopants.

The invention further provides a catalyst coated membrane, comprising a membrane coated with a catalyst of the invention as described herein.

The invention also provides a method of making and activating a catalyst coated membrane, the method comprising the following steps in order:
(i) forming an anode catalyst powder, comprising a catalyst of the invention;
(ii) dispersing the anode catalyst powder in a mixture comprising a solvent and an ionomer to produce an anode catalyst ink;
(iii) spraying the anode catalyst ink onto a first side of a desired membrane (e.g. a Nafion membrane) to produce an anode catalyst layer on the first side of the membrane;
(iv) applying a cathode catalyst onto a second side of the membrane to produce a cathode catalyst layer on the second side of the membrane; and
(v) immersing the coated membrane in deionised water or an acidic solution for an extended period of time;
wherein the ionomer present in step (ii) may be a material of the membrane in step (iii), and wherein the second side of the membrane is opposite to the first side of the membrane.

Additionally, the invention provides a membrane electrode assembly (MEA) comprising a catalyst coated membrane (CCM) of the invention.

The invention also provides a method of hydrogen production via proton exchange membrane (PEM)-based water electrolysis, the method comprising using a catalyst, a catalyst coated membrane and/or a membrane electrode assembly of the invention as described herein.

Within the scope of this application, it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any described embodiment can be combined with other embodiments in any way and/or combination, unless such features are incompatible.

### Brief Description of the Drawings

Figures 1 and 2 show a comparison of the electrochemical performance of a Ru_{0.8}Co_{0.2}Oₓ catalyst compared to an Ir catalyst.
Figure 3 shows a comparison of the electrochemical performance of a Ru_{0.75}Mn_{0.25}Oₓ catalyst compared to an Ir catalyst.
Figure 4 shows a comparison of the electrochemical performance of a Ru_{0.8}Fe_{0.1}Mn_{0.1}Oₓ catalyst compared to an Ir catalyst.
Figure 5 shows a comparison of the electrochemical performance of a Ru_{0.7}Fe_{0.1}Mn_{0.1}Ni_{0.1}Oₓ catalyst compared to an Ir catalyst.
Figure 6 shows a comparison of the electrochemical performance of a Ru_{0.75}Ni_{0.25}Oₓ catalyst compared to an Ir catalyst.
Figure 7 shows a comparison of the electrochemical performance of a Ru_{0.8}Nb_{0.2}Oₓ catalyst compared to an Ir catalyst.
Figure 8 shows a comparison of the electrochemical performance of a Ru_{0.8}Co_{0.1}Nb_{0.1}Oₓ catalyst compared to an Ir catalyst.
Figure 9 shows a comparison of the electrochemical performance of various catalysts of the invention, including Ru_{0.8}Co_{0.2}Oₓ, Ru_{0.8}Ir_{0.2}Oₓ, Ru_{0.8}Nb_{0.2}Oₓ and Ru_{0.8}Co_{0.1}Nb_{0.1}Oₓ.
Figure 10 shows the electrochemical stability of Ru_{0.8}Co_{0.2}Oₓ.
Figure 11 shows the electrochemical stability of Ru_{0.8}Fe_{0.1}Mn_{0.1}Oₓ.
Figure 12 shows the electrochemical stability of Ru_{0.75}Ni_{0.25}Oₓ.
Figure 13 shows the electrochemical stability of Ru_{0.8}Nb_{0.2}Oₓ.
Figure 14 is a comparative example showing the electrochemical stability of Ir.
Figure 15 is a comparative example showing the electrochemical stability of RuO₂.
Figure 16 shows a comparison of the electrochemical stability of Ru_{0.8}Co_{0.1}Nb_{0.1}Oₓ compared to an Ir catalyst at 1A/cm².
Figure 17 shows X-ray diffraction (XRD) patterns for several catalysts of the invention.
Figure 18 shows a co-precipitation-calcination method for synthesising catalysts of the invention as well as comparative catalyst RuO₂.
Figure 19 shows a molten salt synthesis method for synthesising catalysts of the invention.

### Detailed Description of the Invention

All references cited herein are incorporated by reference in their entirety. Unless otherwise defined, all technical and scientific terms used herein have the same meaning as commonly understood by one of ordinary skill in the art to which this invention belongs.

Prior to setting forth the invention, a number of definitions are provided that will assist in the understanding of the invention.

As used herein, the term 'comprising' means any of the recited elements are necessarily included and other elements may optionally be included as well. `Consisting essentially of' means any recited elements are necessarily included, elements that would materially affect the basic and novel characteristics of the listed elements are excluded, and other elements may optionally be included. `Consisting of' means that all elements other than those listed are excluded. Embodiments defined by each of these terms are within the scope of this invention.

In general terms the present invention provides an anode catalyst for electrolysis, in particular for (PEM)-based water electrolysis. Suitably, the catalyst is a ruthenium oxide catalyst doped with one or more metals.

The catalyst comprises a ruthenium oxide catalyst doped with one or more metals, having the general formula RuₐM₁₋ₐOₓ, wherein:
M is one or more metal dopant;
a is a number from 0.5 to 0.85; and
Oₓ indicates an oxide of any possible ratio relative to the ruthenium and metal dopants.

In some embodiments, the catalyst comprises only one dopant. In some embodiments, the catalyst comprises two or more dopants, for example three or more dopants, or four or more dopants.

In some embodiments, the catalyst comprises from 1 to 5 metal dopants, for example from 1 to 4 metal dopants, typically from 1 to 3 metal dopants (e.g. 1 metal dopant or 2 metal dopants).

In embodiments where the catalyst comprises one metal dopant, M represents the single metal dopant and 1-a represents the amount of the metal dopant in the catalyst relative to the amount of ruthenium. In such embodiments, M₁₋ₐ may be represented by M¹_{b}, wherein M¹ is a monometal dopant and b represents the amount of the metal dopant M¹ relative to the amount, a, of ruthenium in the catalyst.

In embodiments where the catalyst comprises more than one metal dopant (i.e. where the catalyst comprises mixed metal dopants), M represents all of the metal dopants and 1-a represents the total amount of metal dopants in the catalyst relative to the amount of ruthenium. Therefore, in such embodiments, 1-a is the sum of the amounts of each of the metal dopants in the catalyst relative to the amount of ruthenium.

In embodiments where the catalyst comprises two different metal dopants, M₁₋ₐ may be represented by M¹_{b}M²_{c}, wherein M¹ is a first monometal dopant, b represents the amount of the metal dopant M¹ in the catalyst relative to the amount of ruthenium, M² is a second monometal dopant, and c represents the amount of the metal dopant M² in the catalyst relative to the amount of ruthenium. In such embodiments b+c=1-a, which represents the total amount of all metal dopants in the catalyst relative to the amount of ruthenium.

In embodiments where the catalyst comprises three different metal dopants, M₁₋ₐ may be represented by M¹_{b}M²_{c}M³_{d}, wherein M¹ is a first monometal dopant, b represents the amount of the metal dopant M¹ in the catalyst relative to the amount of ruthenium, M² is a second monometal dopant, c represents the amount of the metal dopant M² in the catalyst relative to the amount of ruthenium, M³ is a third monometal dopant, and d represents the amount of the metal dopant M³ in the catalyst relative to the amount of ruthenium. In such embodiments b+c+d=1-a, which represents the total amount of all metal dopants in the catalyst relative to the amount of ruthenium.

It will be understood by the skilled person that various oxides may exist for each combination of one or more metal dopants. The possible values of x will vary depending on the dopant and/or the ratio of dopant to ruthenium. Oₓ should therefore be understood to include all possible ratios of oxygen in the catalyst relative to the ruthenium and metal dopants.

Without wishing to be bound by theory, it is understood that when x is around 2, the catalyst structure is most stable. Therefore, suitably, x may be around 2.

In some embodiments, x may be a number from 1 to 3, for example a number from 1.5 to 2.5, typically from 1.7 to 2.3 (e.g. from 1.8 to 2.2).

In some embodiments, catalysts of the invention may have the general formula RuₐM¹_{b}M²_{c}M³_{d}Oₓ, wherein a and Oₓ are as defined above (i.e a is a number from 0.5 to 0.85; and

Oₓ indicates an oxide of any possible ratio relative to the ruthenium and metal dopants), and wherein:
M¹, M² and M³ are each different monometal dopants;
b, c and d are each independently numbers from 0 to 0.5; and
a+b+c+d=1.

In some embodiments, the one or more metal dopants (for example M¹, M² and M³) may each independently be selected from the transition metals, lanthanides and actinides (i.e. from the d-block or f-block elements). For example, the one or more metal dopants may each independently be selected from the transition metals (i.e. d-block elements) and/or lanthanides. In preferred embodiments, the one or more metal dopants may each independently be selected from the transition metals (i.e. d-block elements).

In some embodiments, the one or more metal dopants may be selected from transition metals in periods 4, 5 and 6 of the periodic table. For example, the one or more metal dopants may be selected from the list Mn, Fe, Ni, Mo, Co, Ir, Nb, Ti, Zn.

In some embodiments, the one or more metal dopants may be selected from transition metals in periods 4 or 5 of the periodic table. For example, the one or more metal dopants may be selected from Mn, Fe, Ni, Mo, Co, Nb, Ti, Zn.

In some embodiments, the one or more metal dopants may be selected from transition metals in period 4 of the periodic table. For example, the one or more metal dopants may be selected from selected from: Mn, Fe, Ni, Co, Ti, or Zn.

In some embodiments, the one or more metal dopants may be selected from: Co, Fe, Mn, Ni, Ir, Mo, Ce, Nb, Ti or Zn. For example, the one or more metal dopants may be selected from: Co, Fe, Mn, Ni, Ir or Ce.

In embodiments where more than one different metal dopant is present, each metal dopant may be independently selected from the same or a different list provided above (excluding selection of the same dopant).

In embodiments where two or three metal dopants are present and M¹ is Fe, M² and, if present, M³ may be selected from transition metals in period 4 of the periodic table. For example, in such embodiments, M² and M³ may be selected from: Mn, Ni, Co, Ti, or Zn. In some embodiments, where M¹ is Fe, M² may be Mn or Ni.

In some embodiments, a is at least around 0.5, for example at least 0.6, typically at least 0.7 (e.g. a is 0.8). In some embodiments, a is at most 0.9, for example at most 0.85, typically at most 0.8. In embodiments of the invention, a is a number from around 0.5 to around 0.85, for example from 0.6 to 0.85, typically from 0.7 to 0.85 (e.g. 0.75 to 0.8).

As discussed above, b+c+d=1-a. Therefore, in embodiments of the invention, b+c+d may be 0.1 to 0.5 (e.g. 0.15 to 0.5), for example b+c+d may be 0.15 to 0.4, typically from 0.15 to 0.3 (e.g. from 0.2 to 0.25).

In some embodiments, b, c and d are each numbers from 0 to 0.3. In some embodiments, one or more of b, c and d is at least 0.05, for example at least 0.1, typically at least 0.15 (e.g. at least 0.2). In some embodiments, one or more of b, c and d is at most 0.3, for example at most 0.25.

In some embodiments, one or more of b, c, and d is a number from 0.1 to 0.3, for example from 0.15 to 0.25, typically from 0.2 to 0.25.

In some embodiments, d is 0. In such embodiments, the invention provides a catalyst with the general formula RuₐM¹_{b}M²_{c}Oₓ, wherein a+b+c=1 and all other terms are as defined elsewhere.

In some embodiments where d is 0, b and c may be at least 0.05, for example at least 0.1, typically at least 0.15 (e.g. at least 0.2). In some embodiments where d is 0, b and c may be at most 0.3, for example at most 0.25. In some embodiments where d is 0, b and c may each be a number from 0.1 to 0.3, for example from 0.15 to 0.25, typically from 0.2 to 0.25.

In some embodiments, both c and d are 0. In such embodiments, b is not 0. In such embodiments, the invention provides a catalyst with the general formula RuₐM¹_{b}Oₓ, wherein a+b=1 and all other terms are as defined elsewhere.

In some embodiments where both c and d are 0, b may be at least 0.1, for example at least 0.15, typically at least 0.2. In some embodiments where both c and d are 0, b may be at most 0.3, for example at most 0.25. In some embodiments where both c and d are 0, b may be a number from 0.1 to 0.3, for example from 0.15 to 0.3, typically from 0.2 to 0.25. In such embodiments where both c and d are 0, if b is a number from 0.1 to 0.3, a may be a number from 0.7 to 0.9; if b is a number from 0.15 to 0.3, a may be a number from 0.7 to 0.85; and if b is a number from 0.2 to 0.25, a may be a number from 0.75 to 0.8.

In some embodiments, the invention provides a catalyst wherein:
M¹ is Fe and b is 0.05 to 0.15;
M¹ is Mn and b is 0.20 to 0.30;
M¹ is Ni and b is 0.20 to 0.30;
M¹ is Ni and b is 0.05 to 0.15;
M¹ is Co and b is 0.15 to 0.25;
M¹ is Ir and b is 0.05 to 0.50;
M¹ is Ce and b is 0.05 to 0.50; or
M¹ is Nb and b is 0.05 to 0.3.

In some embodiments, the invention provides a catalyst wherein:
M¹ is Fe and b is 0.05 to 0.15;
M¹ is Mn and b is 0.20 to 0.30;
M¹ is Ni and b is 0.20 to 0.30;
M¹ is Ni and b is 0.05 to 0.15;
M¹ is Co and b is 0.15 to 0.25;
M¹ is Ir and b is 0.15 to 0.25;
M¹ is Ce and b is 0.15 to 0.25; or
M¹ is Nb and b is 0.05 to 0.3.

In some embodiments, the invention provides a catalyst wherein:
M¹ is Fe and b is 0.05 to 0.15;
M¹ is Mn and b is 0.20 to 0.30;
M¹ is Ni and b is 0.20 to 0.30;
M¹ is Ni and b is 0.05 to 0.15;
M¹ is Co and b is 0.15 to 0.25;
M¹ is Ir and b is 0.05 to 0.50 (e.g. 0.15 to 0.25);
M¹ is Ce and b is 0.05 to 0.50 (e.g. 0.15 to 0.25); or
M¹ is Nb and b is 0.15 to 0.3.

In some embodiments, the invention provides a catalyst wherein:
M¹ is Fe and b is 0.05 to 0.15;
M¹ is Mn and b is 0.20 to 0.30;
M¹ is Ni and b is 0.20 to 0.30;
M¹ is Ni and b is 0.05 to 0.15;
M¹ is Co and b is 0.15 to 0.25;
M¹ is Ir and b is 0.05 to 0.50; or
M¹ is Ce and b is 0.05 to 0.50.

In some embodiments, the invention provides a catalyst wherein:
M¹ is Fe and b is 0.05 to 0.15;
M¹ is Mn and b is 0.20 to 0.30;
M¹ is Ni and b is 0.20 to 0.30;
M¹ is Ni and b is 0.05 to 0.15;
M¹ is Co and b is 0.15 to 0.25; or
M¹ is Nb and b is 0.15 to 0.3.

In some embodiments, the catalyst is selected from RuₐNb_{b}Oₓ, RuₐCo_{b}Nb_{c}Oₓ, RuₐCo_{b}Oₓ, RuₐMn_{b}Oₓ, RuₐFe_{b}Mn_{c}Oₓ, RuₐFe_{b}Mn_{c}Ni_{d}Oₓ, RuₐNi_{b}Oₓ, RuₐMo_{b}Oₓ, or RuₐIr_{b}Oₓ, wherein a, b, c, and d are as defined elsewhere herein. In some embodiments, the catalyst is selected from RuₐCo_{b}Oₓ, RuₐMn_{b}Oₓ, RuₐFe_{b}Mn_{c}Oₓ, RuₐFe_{b}Mn_{c}Ni_{d}Oₓ, RuₐNi_{b}Oₓ, RuₐMo_{b}Oₓ, or RuₐIr_{b}Oₓ. For example, the catalyst may be selected from RuₐCo_{b}Oₓ, RuₐFe_{b}Mn_{c}Oₓ, RuₐNi_{b}Oₓ, RuₐIr_{b}Oₓ. In other embodiments, the catalyst may be selected from RuₐCo_{b}Oₓ, RuₐMn_{b}Oₓ, RuₐFe_{b}Mn_{c}Oₓ, RuₐFe_{b}Mn_{c}Ni_{d}Oₓ, RuₐNi_{b}Oₓ, RuₐMo_{b}Oₓ.

In some embodiments, the invention provides a ruthenium oxide catalyst doped with one or more metals, having the general formula RuₐM₁₋ₐOₓ, wherein:
M is one or more transition metal dopant;
a is a number from around 0.5 to around 0.85; and
Oₓ indicates an oxide of any possible ratio relative
to the ruthenium and metal dopants.

In some embodiments, the catalyst of the invention is not of the formula Ru_{0.9}Nb_{0.1}O₂ (e.g. the catalyst may not be of the formula Ru_{0.9}Nb_{0.1}Oₓ). For example, in embodiments of the invention it is preferred that when c and d are both 0 and M¹ is Nb, b is not 0.1 (e.g. when M¹ is Nb, b may not be 0.1).

The invention further provides a catalyst coated membrane, comprising a membrane coated with a catalyst of the invention as described herein.

In some embodiments, the catalyst coated membrane may comprise:
(i) an anode catalyst layer,
(ii) a membrane (e.g. a Nafion^{®} membrane), and
(iii) a cathode catalyst layer;
wherein the anode catalyst layer comprises a catalyst of the invention as described herein.

In some embodiments, the anode catalyst layer may further comprise an ionomer. Typically, the membrane may comprise, or substantially consist of, an ionomer. Typically, the membrane may comprise at least 50% by mass of an ionomer, for example at 70% by mass of an ionomer and preferably at least 80% by mass of an ionomer. In preferred embodiments, the anode catalyst layer and the membrane may comprise the same ionomer. For example, the membrane may substantially consist of an ionomer (e.g. comprise at least 50% by mass of an ionomer) and the anode catalyst layer may comprise the same ionomer.

In some embodiments where the anode catalyst layer comprises an ionomer, the ratio of ionomer to catalyst may be from 0.05 to 0.45, preferably from 0.05 to 0.3, for example from 0.05 to 0.2.

The invention also provides a method of making a catalyst coated membrane, the method comprising applying a catalyst of the invention to a membrane (e.g. a Nafion^{®} membrane).

In some embodiments, the method of making a catalyst coated membrane, may comprise the following steps in order:
(i) forming an anode catalyst powder, comprising a catalyst of the invention;
(ii) dispersing the anode catalyst powder in a mixture comprising a solvent and an ionomer to produce an anode catalyst ink;
(iii) spraying the anode catalyst ink onto a first side of a desired membrane (e.g. a Nafion membrane) to produce an anode catalyst layer on the first side of the membrane;
wherein the ionomer present in step (ii) may be a material of the membrane in step (iii).

In some embodiments, the method of producing a catalyst coated membrane may comprise spraying the anode catalyst ink onto the membrane at a catalyst loading of from 0.5mg/cm² to 5.0mg/cm², preferably from 1.0mg/cm² to 3.0mg/cm², for example from 1.5mg/cm² to 2.0mg/cm².

In some embodiments, the method typically comprises an additional step, step (iv):
(iv) applying a cathode catalyst onto a second side of the membrane to produce a cathode catalyst layer on the second side of the membrane;
wherein the second side of the membrane is opposite to the first side of the membrane.

In some embodiments, the method of producing a catalyst coated membrane may comprise an additional step of activating (also referred to as pre-conditioning) the membrane by immersing the coated membrane (e.g. the coated membrane of step (iii) or (iv) above) in deionised water or an acidic solution for an extended period of time. The extended period of time may be at least 12 hours, typically at least 24 hours, suitably at least 36 hours (e.g. about 48 hours). In embodiments where the coated membrane is immersed in an acidic solution, the acidic solution may be a solution with a pH of less than 4, preferably a solution with a pH of less than 2, for example a solution with a pH of less than 1. In some such embodiments, the acidic solution may comprise sulfuric acid or hydrochloric acid.

Typically, the step of activating the membrane is only carried out after a cathode catalyst has been coated onto a second side of the membrane. Accordingly, the invention may provide a method of making and activating a catalyst coated membrane, comprising the following steps in order:
(vi) forming an anode catalyst powder, comprising a catalyst of the invention;
(vii) dispersing the anode catalyst powder in a mixture comprising a solvent and an ionomer to produce an anode catalyst ink;
(viii) spraying the anode catalyst ink onto a first side of a desired membrane (e.g. a Nafion membrane) to produce an anode catalyst layer on the first side of the membrane;
(ix) applying a cathode catalyst onto a second side of the membrane to produce a cathode catalyst layer on the second side of the membrane; and
(x) immersing the coated membrane in deionised water or an acidic solution for an extended period of time;
wherein the ionomer present in step (ii) may be a material of the membrane in step (iii), and wherein the second side of the membrane is opposite to the first side of the membrane.

Additionally, the invention provides a membrane electrode assembly (MEA) comprising a catalyst coated membrane (CCM) of the invention.

In some embodiments, the membrane electrode assembly may comprise a porous transport layer (PTL). Typically, the PTL is positioned adjacent to one or both opposing sides of the catalyst coated membrane (CCM). For example, there may be a PTL adjacent to the anode side of the catalyst coated membrane (i.e. adjacent to the side of the catalyst coated membrane coated with an anode catalyst and facing the anode) and/or adjacent to the cathode side of the catalyst coated membrane (i.e. adjacent to the side of the catalyst coated membrane coated with a cathode catalyst and facing the cathode). Typically, a PTL adjacent to the anode side of the CCM (a first porous transport layer) may comprise titanium and/or platinised titanium fibre papers. In embodiments where the PTL comprises platinised titanium fibre papers, typically the fibre papers have a thickness of from 200 to 400um and a porosity of from 25% to 85%.

Accordingly, an MEA of the invention may comprise the following elements, in order:
(i) an anode;
(ii) a first porous transport layer (PTL) adjacent to a first side of a catalyst coated membrane;
(iii) a catalyst coated membrane of the invention having a first side and a second side;
(iv) a second porous transport layer (PTL) adjacent to a second side of the catalyst coated membrane; and
(v) a cathode;
wherein the first side of the catalyst coated membrane is coated with a catalyst of the invention, and wherein the first side of the catalyst coated membrane faces the anode, and the second side of the catalyst coated membrane faces the cathode.

In some embodiments, the membrane electrode assembly may comprise one or more gaskets. The positioning of the gaskets is conventional in the art. In preferred embodiments wherein the MEA comprises a first and/or second PTL adjacent to the first and/or second sides of the CCM respectively, the one or more gaskets may be present (a) between the anode and the first PTL, and (b) between the second PTL and the cathode. The material of the gaskets is conventional in the art. Typically, the one or more gaskets may comprise PTFE, FRT and/or silicone.

Typically, the design of the gaskets, PTL and the overall MEA is such that the total thickness of the MEA may be compressed by from 5 to 35% in use.

The invention further provides a method of making a membrane electrode assembly of the invention, the method comprising positioning a CCM of the invention between an anode and a cathode.

The invention further provides a method of making a membrane electrode assembly of the invention, the method comprising the following steps:
(i) positioning a first porous transport layer (PTL) adjacent to a first side of a catalyst coated membrane (CCM) of the invention;
(ii) positioning a second porous transport layer (PTL) adjacent to a second side of the catalyst coated membrane (CCM);
(iii) positioning an anode adjacent to the first PTL; and
(iv) positioning a cathode adjacent to the second PTL.
wherein the first and second sides of the catalyst coated membrane are opposite to each other.

The method of making a membrane electrode assembly of the invention, may further comprise a step of (a) positioning a first gasket between the anode and the first PTL, and/or (b) positioning a second gasket between the second PTL and the cathode.

Accordingly, a method of making a membrane electrode assembly of the invention, may comprise the following steps:
(i) positioning a first porous transport layer (PTL) adjacent to a first side of a catalyst coated membrane (CCM) of the invention;
(ii) positioning a second porous transport layer (PTL) adjacent to a second side of the catalyst coated membrane (CCM);
(iii) positioning a first gasket adjacent to the first PTL,
(iv) positioning a second gasket adjacent to the second PTL;
(v) positioning an anode adjacent to the first gasket; and
(vi) positioning a cathode adjacent to the second gasket;
wherein the first and second sides of the catalyst coated membrane are opposite to each other.

The invention also provides a method of hydrogen production via proton exchange membrane (PEM)-based water electrolysis, the method comprising using a catalyst, a catalyst coated membrane and/or a membrane electrode assembly of the invention as described herein.

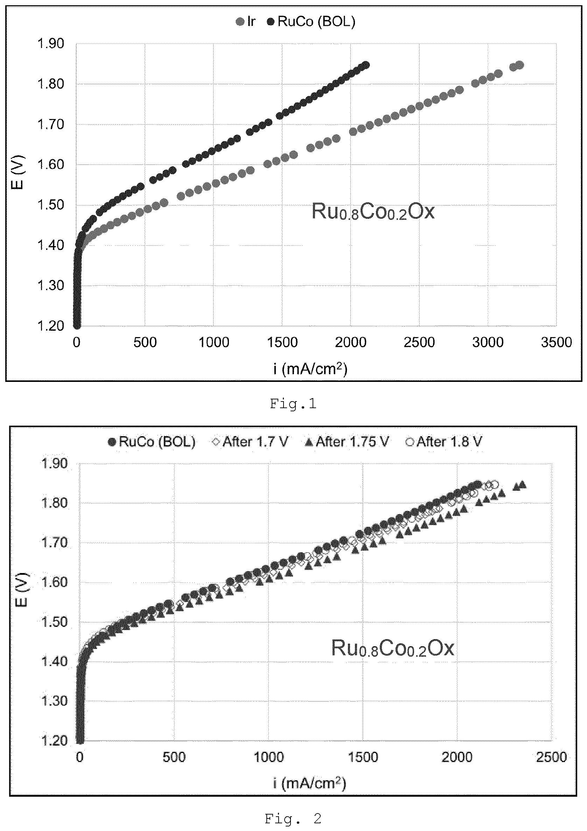

Figures 1 to 8 show comparisons of the electrochemical performance of various catalysts of the invention compared to an iridium catalyst. In order, Figures 1 to 8 show the electrochemical performance of the following catalysts of the invention: Ru_{0.8}Co_{0.2}Oₓ, Ru_{0.8}Co_{0.2}Oₓ at differing potentials, Ru_{0.75}Mn_{0.25}Oₓ, Ru_{0.8}Fe_{0.1}Mn_{0.1}Oₓ, Ru_{0.7}Fe_{0.1}Mn_{0.1}Ni_{0.1}Oₓ, Ru_{0.75}Ni_{0.25}Oₓ, Ru_{0.8}Nb_{0.2}Oₓ at differing potentials, and Ru_{0.8}Co_{0.1}Nb_{0.1}Oₓ at differing potentials.

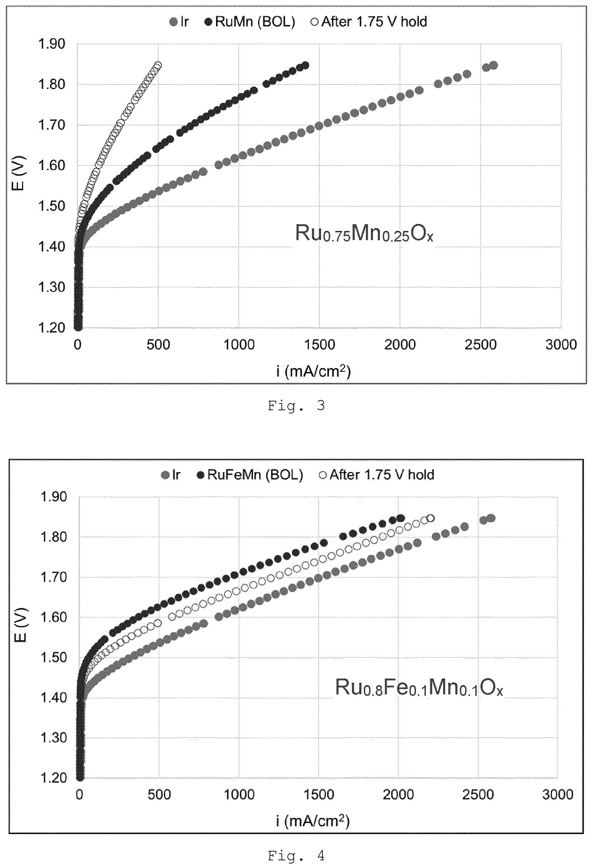

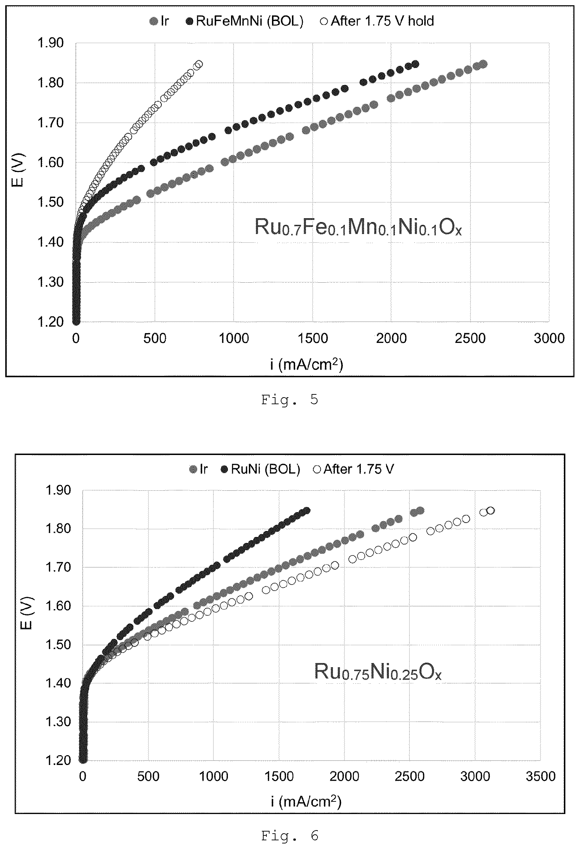

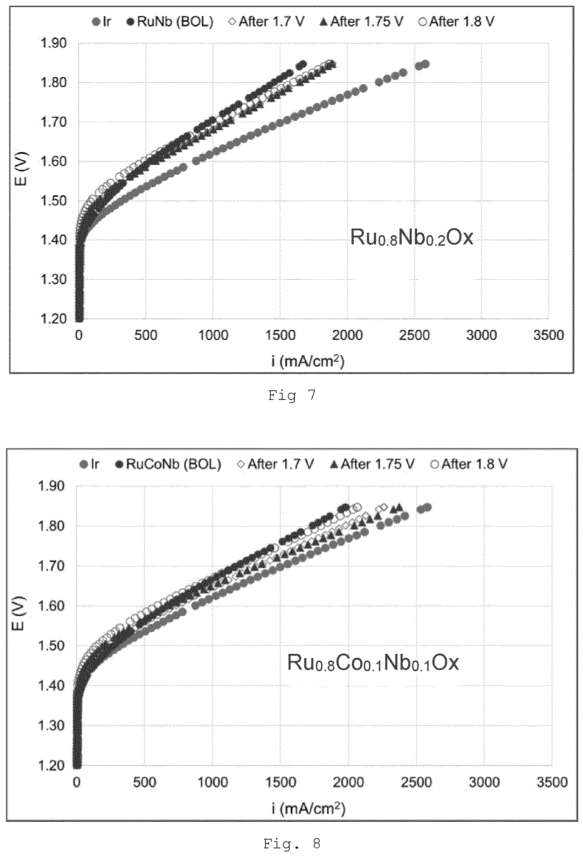

Figures 1 to 8 show that the catalysts of the invention all have high initial electrochemical performance. Figure 1 shows an 80 mV increase in electrode potential (E) for Ru_{0.8}Co_{0.2}Oₓ relative to Ir at 1A/cm². Figure 2 shows the electrode potential (E) for Ru_{0.8}Co_{0.2}Oₓ after holds at 1.7V, 1.75V and 1.8V. Figure 3 shows a 170 mV increase in electrode potential (E) for Ru_{0.75}Mn_{0.25}Oₓ relative to Ir at 1A/cm². Figure 4 shows an 80 mV increase in electrode potential (E) for Ru_{0.8}Fe_{0.1}Mn_{0.1}Oₓ relative to Ir at 1A/cm². Figure 5 shows a 100mV increase in electrode potential (E) for Ru_{0.7}Fe_{0.1}Mn_{0.1}Ni_{0.1}Oₓ relative to Ir at 1A/cm². Figure 6 shows a 90mV increase in electrode potential (E) for Ru_{0.75}Ni_{0.25}Oₓ relative to Ir at 1A/cm². Figure 7 shows an increase of 90mV in electrode potential (E) for Ru_{0.8}Nb_{0.2}Oₓ relative to Ir at 1A/cm². Figure 8 shows an increase of 50mV in electrode potential (E) for Ru_{0.8}Co_{0.1}Nb_{0.1}Oₓ relative to Ir at 1A/cm².

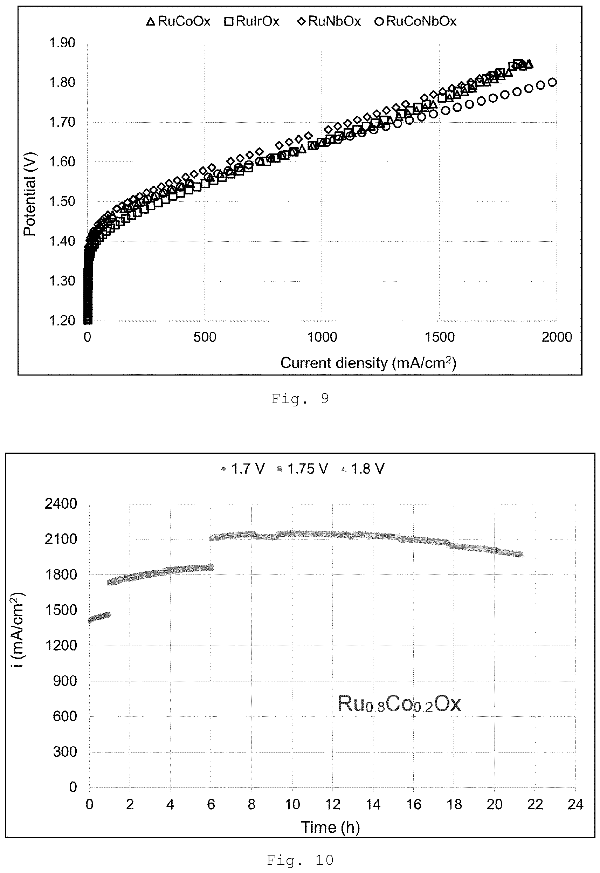

Figure 9 shows a comparison of the electrochemical performance of various catalysts of the invention, including Ru_{0.8}Co_{0.2}Oₓ, Ru_{0.8}Ir_{0.2}Oₓ, Ru_{0.8}Nb_{0.2}Oₓ and Ru_{0.8}Co_{0.1}Nb_{0.1}Oₓ. Whilst all four catalysts are shown to have a good electrochemical performance, the electrochemical performance of Ru_{0.8}Co_{0.1}Nb_{0.1}Oₓ was shown to be superior to the electrochemical performance of Ru_{0.8}Nb_{0.2}Oₓ.

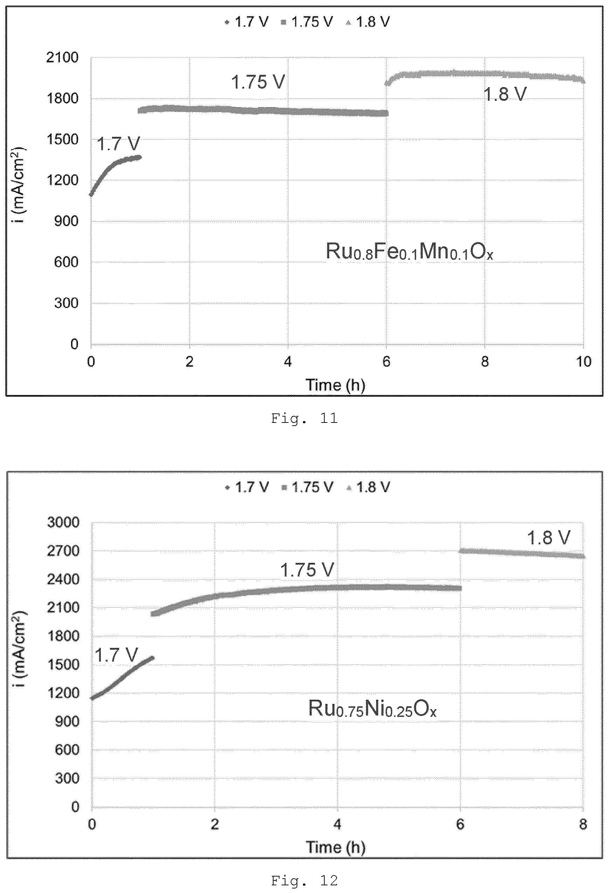

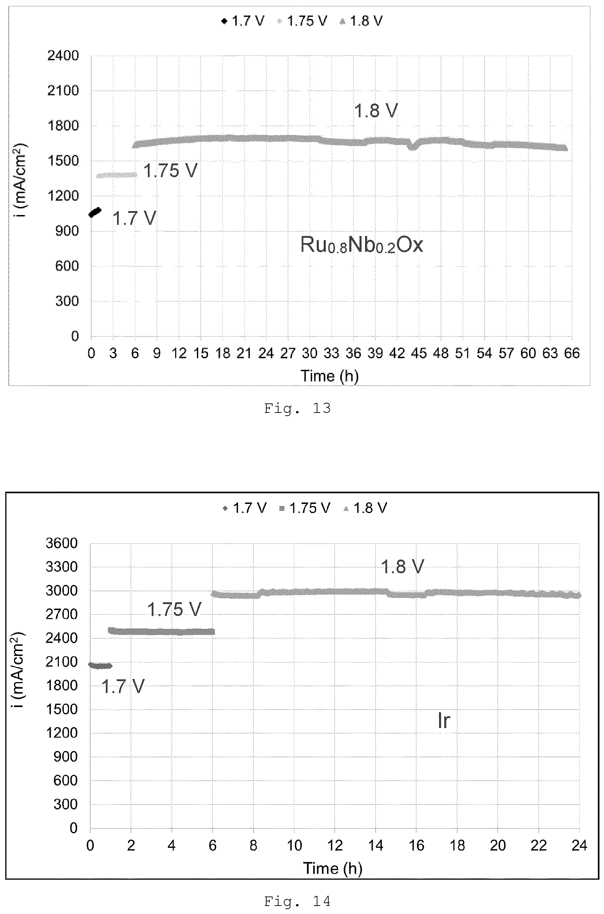

Figures 10 to 13 show the electrochemical stability of various catalysts of the invention. In order, Figures 10 to 13 show the electrochemical stability of the following catalysts of the invention: Ru_{0.8}Co_{0.2}Oₓ, Ru_{0.8}Fe_{0.1}Mn_{0.1}Oₓ, Ru_{0.75}Ni_{0.25}Oₓ and Ru_{0.8}Nb_{0.2}Oₓ. Ru_{0.8}Co_{0.2}Oₓ had a stable current density of >2.0A/cm² at 1.8V for 15 hours (see Figure 10). Ru_{0.8}Fe_{0.1}Mn_{0.1}Oₓ had a stable current density of 1.7A/cm² at 1.75V for 5 hours (see Figure 11). Ru_{0.8}Fe_{0.1}Mn_{0.1}Oₓ was also shown to have a stable current density of 2A/cm² at 1.8V for 4 hours (see Figure 11). Ru_{0.75}Ni_{0.25}Oₓ had a stable current density of 2.3A/cm² at 1.75V for 5 hours (see Figure 12). Ru_{0.75}Ni_{0.25}Oₓ was also shown to have a stable current density of 2.7A/cm² at 1.8V for 2 hours (see Figure 12). Ru_{0.8}Nb_{0.2}Oₓ had a stable current density of >1.6A/cm² at 1.8V for 58 hours (see Figure 13).

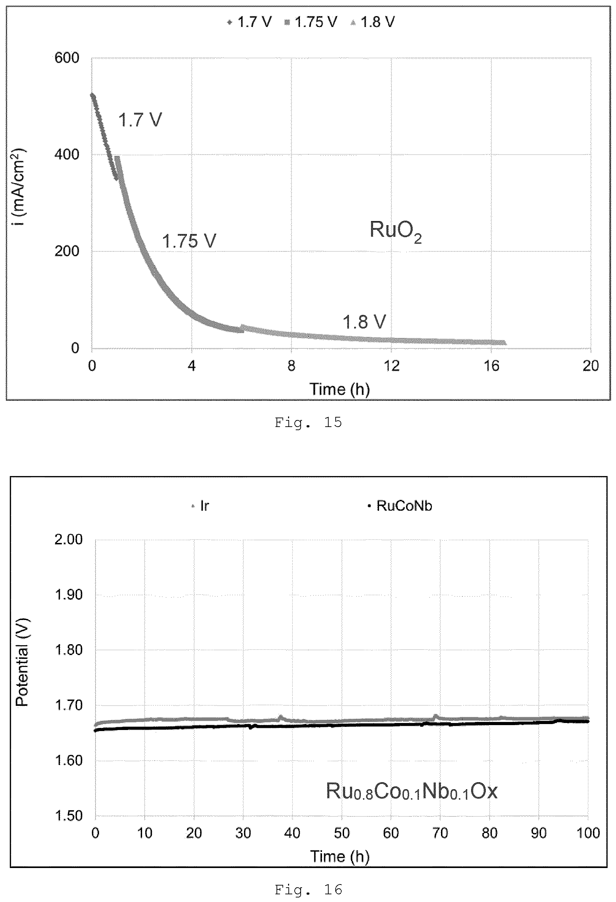

Figures 14 and 15 show the electrochemical stability of comparative catalysts. Figure 14 demonstrates the high electrochemical stability of Ir over time. Contrastingly, Figure 15 demonstrates the very low electrochemical stability of un-doped RuOz over time. The doped ruthenium oxide catalysts of the invention shown in Figures 10 to 13 (Ru_{0.8}Co_{0.2}Oₓ, Ru_{0.8}Fe_{0.1}Mn_{0.1}Oₓ, Ru_{0.75}Ni_{0.25}Oₓ and Ru_{0.8}Nb_{0.2}Oₓ) all have significantly improved electrochemical stability over undoped RuO₂.

Figure 16 demonstrates the electrochemical stability of Ru_{0.8}Co_{0.1}Nb_{0.1}Oₓ relative to Ir. Cell potential was recorded as a function of time during the 100h hold at 1A/cm². The average degradation rate for Ru_{0.8}Co_{0.1}Nb_{0.1}Oₓ was very similar to that for Ir (158µV/h vs. 132µV/h). These results demonstrate the excellent properties of catalysts of invention as possible replacements for Ir in PEM-based water electrolysis.

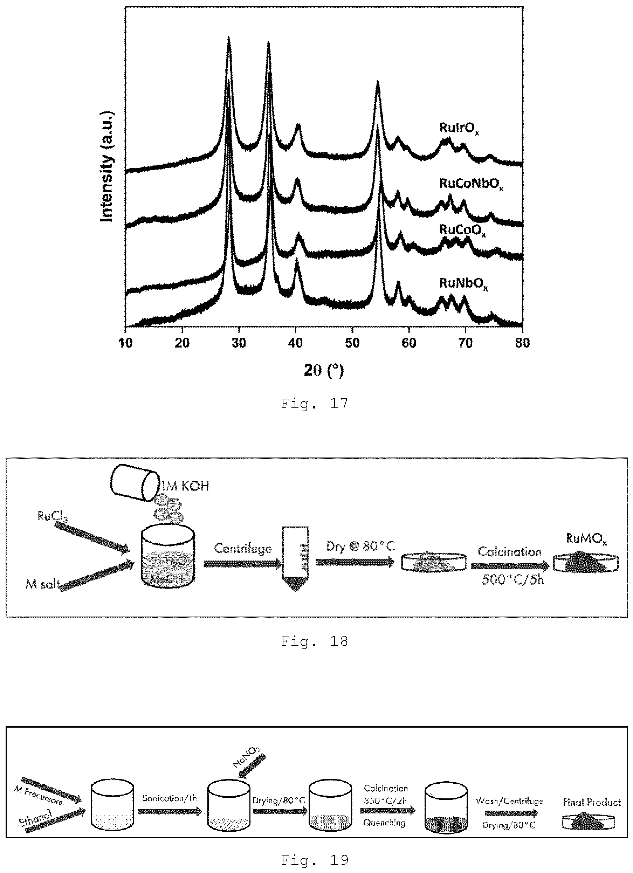

Figure 17 shows X-ray diffraction (XRD) patterns for catalysts of the invention. The catalysts shown in Figure 17, Ru_{0.8}Ir_{0.2}Oₓ, Ru_{0.8}Co_{0.1}Nb_{0.1}Oₓ, Ru_{0.8}Co_{0.2}Oₓ and Ru_{0.8}Nb_{0.2}Oₓ, all exhibited phase purity and similar XRD patterns to pure RuO₂.

### Definitions

The term transition metals refers to d-block transition metals only. This term therefore does not include the lanthanides and actinides (f-block elements), which are sometimes referred to as the inner transition metals.

Where numbers have been defined as from x to y (or between x and y), this is inclusive of x and y. For example, when a is defined as from 0.5 to 0.85, a may be 0.5 or a may be 0.85, or a may be any other number between 0.5 to 0.85 (e.g. 0.55, 0.6, 0.65, 0.7, etc).

In embodiments where three metal dopants are present, M¹, M² and M³ are randomly assigned, i.e. it does not matter which of the dopants is labelled M¹, M² and M³.

In embodiments where two metal dopants are present, typically M¹ and M² are used to represent the two dopants and M³ is not used (i.e. d is 0). However, M¹ and M² are randomly assigned, i.e. it does not matter which of the dopants is labelled M¹ and M².

In embodiments where one metal dopant is present, typically M¹ is used to represent the dopant and M² and M³ are not used (i.e. c and d are both 0).

For the purposes of this disclosure the term metal precursors refers to the metal dopants in their pure form, i.e. the metal dopants with oxidation state 0.

Throughout the disclosure, where chemical ratios are not specified, they are intentionally undefined. For example, RuCoOₓ represents a ruthenium oxide catalyst doped with cobalt, wherein the ratio of cobalt to ruthenium is undefined. It is therefore noted that RuCoOₓ is not necessarily Ru_{0.5}Co_{0.5}Oₓ.

Where chemical ratios are not specified for catalysts of the invention, it is to be understood that such catalysts have an undefined chemical ratio falling within the scope of the claims. For example, reference to a RuCoOₓ of the invention, indicates a catalyst of the formula RuₐCo_{b}Oₓ, wherein the a and b are as defined elsewhere herein.

### Examples

### Example 1 - Example Catalysts

Table 1 below provides example catalysts of the invention, having the general formula RuₐM¹_{b}M²_{c}M³_{d}Oₓ, wherein M1, M2, M3, a, b, c, d and Oₓ are as defined elsewhere in the specification. The table provides details of suitable dopants as well as the amount of each dopant present in the example catalysts.

It is noted that in embodiments where three metal dopants are present, M¹, M² and M³ are randomly assigned, i.e. it does not matter which of the dopants is labelled M¹, M² and M³. In embodiments where two metal dopants are present, M¹ and M² are randomly assigned, i.e. it does not matter which of the dopants is labelled M¹ and M². The labelling of the dopants may therefore be used interchangeably.

**Table 1:**

| **General Formula** | **a** | **M¹** | **b** | **M²** | **c** | **M³** | **d** |
|---|---|---|---|---|---|---|---|
| RuMnOₓ | 0.70-0.80 | Mn | 0.20-0.30 | | 0 | | 0 |
| RuFeMnNiOₓ | 0.65-0.75 | Fe | 0.05-0.15 | Mn | 0.05-0.15 | Ni | 0.05-0.15 |
| RuFeMnOₓ | 0.75-0.85 | Fe | 0.05-0.15 | Mn | 0.05-0.15 | | 0 |
| RuNiOₓ | 0.70-0.80 | Ni | 0.20-0.30 | | 0 | | 0 |
| RuMoOₓ | 0.70-0.80 | Mo | 0.20-0.30 | | 0 | | 0 |
| RuCoOₓ | 0.75-0.85 | Co | 0.15-0.25 | | 0 | | 0 |
| RuIrOₓ | 0.75-0.85 | Ir | 0.15-0.25 | | 0 | | 0 |
| RuNbOₓ | 0.75-0.85 | Nb | 0.15-0.25 | | 0 | | 0 |
| RuCoNbOₓ | 0.75-0.85 | Co | 0.05-0.15 | Nb | 0.05-0.15 | | 0 |

### Example 2 - Synthesis of catalysts

Catalysts of the invention as well as the comparative catalyst RuO₂ were synthesised via a co-precipitation-calcination method described below and also shown in Figure 18.

RuCl₃.xH2O (Sigma- Aldrich) and the metal precursors (aka dopant metals) were weighed according to the desired stoichiometry and dissolved in a 1:1 methanol:water mixture. The precipitation was carried out at room temperature by the addition of 1M KOH solution until the pH of the solution reached 7. The mixture was aged for 1 hour and centrifuged at 1000rpm to separate the precipitate. The precipitate was washed four times with 1:1 ethanol:water mixture and dried at 80°C overnight in an air oven. The dried precipitate was ground and calcined at 500°C for 5 hours at a ramp rate of 5°C in a muffle furnace.

After the material attained room temperature, it was collected and analysed using X-ray Diffraction (XRD). Table 2 below shows the composition of various catalysts of the invention (samples 1 to 7) as well as a comparative catalyst (sample C1) formed via the method of Example 2. Also included in the table is an analysis of the composition of commercially available catalysts (sample C2) .

**Table 2:**

| **Sample no.** | **Metal precursors (aka dopant metals)** | **Synthesis Procedure** | **Sample composition (at %, nominal)** |
|---|---|---|---|
| 1 | Mn | Co-precipitation followed by calcination @ 500 °C for 5 h/ 5°Cpm | Ru0.75Mn0.25Ox |
| 2 | Fe, Mn, Ni | Co-precipitation followed by calcination @ 500 °C for 5 h/ 5°Cpm | Ru0.7Fe0.1Mn0.1Ni0.1Ox |
| 3 | Fe, Mn | Co-precipitation followed by calcination @ 500 °C for 5 h/ 5°Cpm | Ru0.8Fe0.1Mn0.1Ox |
| 4 | Ni | Co-precipitation followed by calcination @ 500 °C for 5 h/ 5°Cpm | Ru0.75Ni0.25Ox |
| 5 | Mo | Co-precipitation followed by calcination @ 500 °C for 5 h/ 5°Cpm | Ru0.75Mo0.25Ox |
| 6 | Co | Co-precipitation followed by calcination @ 500 °C for 5 h/ 5°Cpm | Ru0.8Co0.2Ox |
| 7 | Ir | Co-precipitation followed by calcination @ 500 °C for 5 h/ 5°Cpm | Ru0.8Ir0.2Ox |
| C1 | None (Undoped RuO₂ made in house) | Precipitation followed by calcination @ 500 °C for 5 h/ 5°Cpm | RuO2 (in-house) |
| C2 | None (Undoped commercial Ir) | Commercial | Ir |

### Example 3 - Synthesis of catalysts

Several catalysts of the invention could also be synthesised using the citrate gel method as described below.

Metal precursors and citric acid in a molar ratio 1:2 were dissolved in 25ml deionised water at room temperature. The temperature was slowly raised to 80°C with stirring to form a gel. The gel was dried in an air oven overnight at 80°C and the dried mass was ground and calcined at 500°C for 6 hours with a ramp rate of 5°C/min in a muffle furnace to obtain the final product.

### Example 4 - Synthesis of catalysts

Several catalysts of the invention could also be synthesised using the molten salt synthesis method as described below and also shown in Figure 19.

Metal precursors (1mmol total), in accordance with the desired stoichiometric ratio, were dissolved in 2ml of ethanol and ultrasonicated in a bath sonicator for 1 hour. The resulting mass was combined with NaNO₃ (0.0786mol) in a crucible and dried at 80°C, followed by calcination at 350°C for 2 hours at a rate of 5°C/min in a quenching furnace. Subsequently, the molten solid solution was rapidly quenched from 350°C to room temperature. Once cooled, it was washed with water and centrifuged multiple times to remove the NaNO3 and obtain the final material.

After the material attained room temperature, it was collected and analysed using X-ray Diffraction (XRD). Table 3 below shows the composition of various catalysts of the invention (samples 8 and 9) formed via the method of Example 4.

**Table 3:**

| **Sample no.** | **Metal precursors (aka dopant metals)** | **Synthesis Procedure** | **Sample composition (at %, nominal)** |
|---|---|---|---|
| 8 | Nb | Molten salt synthesis followed by calcination @ 350°C for 2 h/ 5°Cpm and quenching | Ru0.8Nb0.2Ox |
| 9 | Co, Nb | Molten salt synthesis followed by calcination @ 350°C for 2 h/ 5°Cpm and quenching | Ru0.8Co0.1Nb0.1Ox |

### Example 5 - Synthesis of Catalyst Coated Membranes Catalyst coated membranes (CCMs) of the invention may be formed according to the following method.

Firstly, anode catalyst powder (commercial or produced by one of the methods provided in Examples 2 to 4) was converted to the catalyst ink by dispersing it in a solvent (isopropyl alcohol) and ionomer mixture (Nafion 5% solution in aliphatic alcohols) via ultrasonication for 30 minutes. Typically, ionomer to catalyst ratio was 0.1 by mass (10% by mass). The uniformly dispersed catalyst ink was then sprayed onto Nafion 115 membrane at 50°C to form catalyst-coated membrane (CCM). The CCM thus obtained was kept in an oven at 60°C for 1h. The anode catalyst loadings were typically around 1.5-2.0 mg/cm2.

The other side of the CCM was then spray-coated in a similar manner with Pt/C. Typical ionomer to catalyst ratio was 0.1 by mass (10% by mass). Pt loading was 0.9-1.0 mg/cm².

The CCM thus obtained was activated by soaking it in deionized water for at least 48h and tested for its electrochemical performance (see Example 6). All electrochemical testing was performed at 80°C and atmospheric pressure. DI water was fed to the anode at 50 mL/minute.

### Example 6 - Comparison of catalysts of the invention compared to prior art catalysts

Table 4 below provides a comparison of the potential and current density of membranes coated with anode catalysts of the invention (samples 6 to 9) compared to membranes coated with anode catalysts of the prior art (samples C3 to C17).

As shown below for a similar potential, the catalysts of the invention have similar or improved current density relative to catalysts of the prior art.

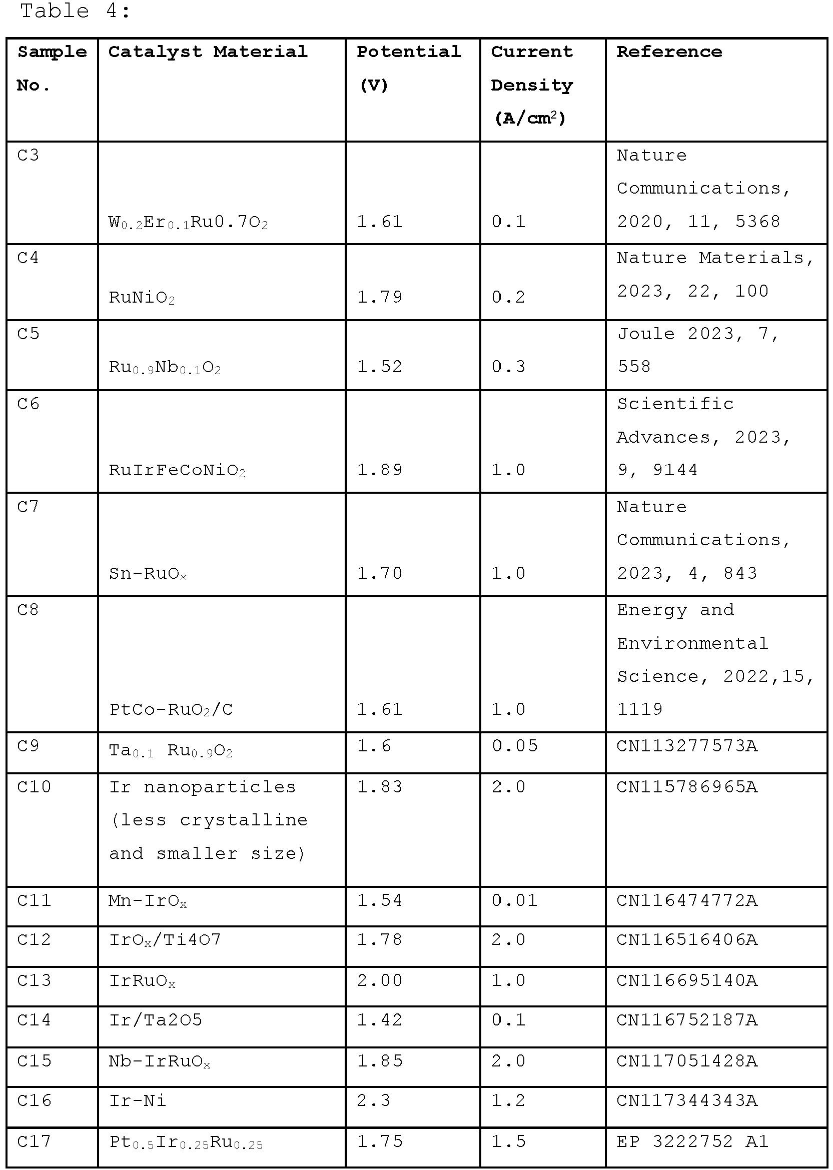

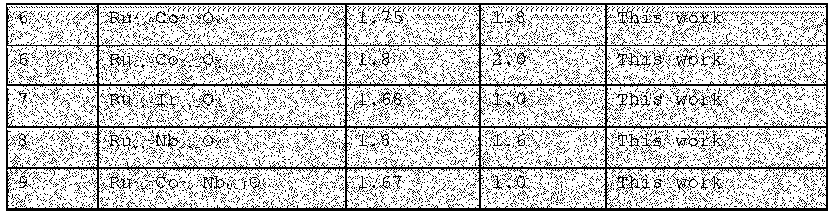

Although particular embodiments of the invention have been disclosed herein in detail, this has been done by way of example and for the purposes of illustration. The aforementioned embodiments are not intended to be limiting with respect to the scope of the appended claims, which follow. It is contemplated by the inventors that various substitutions, alterations, and modifications may be made to the invention without departing from the spirit and scope of the invention as defined by the claims.

## Claims

1. A ruthenium oxide catalyst doped with one or more metals, having the general formula RuₐM₁₋ₐOₓ, wherein:
M is one or more metal dopant;
a is a number from 0.5 to 0.85; and
Oₓ indicates an oxide of any possible ratio relative to the ruthenium and metal dopants.

2. The catalyst of claim 1, having the general formula RuₐM¹_{b}M²_{c}M³_{d}Oₓ, wherein a and Oₓ are as defined in Claim 1, and wherein:
M¹, M² and M³ are each different monometal dopants;
b, c and d are each independently numbers from 0 to 0.5; and
a+b+c+d=1.

3. The catalyst of claim 1 or claim 2, wherein the one or more metal dopants (i.e. M or M¹, M² and M³) are each independently selected from the transition metals.

4. The catalyst of claim 1 or claim 2, wherein M or any of M¹, M² and M³ are selected from Co, Fe, Mn, Ni, Ir, Mo, Ce, Nb, Ti and Zn.

5. The catalyst of any of claims 2 to 4, wherein b, c and d are each numbers from 0 to 0.3.

6. The catalyst of any of claims 1 to 5, wherein a is a number from 0.7 to 0.85.

7. The catalyst of any of claims 2 to 6, wherein c and d are both 0, a is a number from 0.7 to 0.85 and b is a number from 0.15 to 0.3.

8. The catalyst of any of claims 2 or 4 to 6, wherein:
M¹ is Fe and b is 0.05 to 0.15;
M¹ is Mn and b is 0.20 to 0.30;
M¹ is Ni and b is 0.20 to 0.30;
M¹ is Ni and b is 0.05 to 0.15;
M¹ is Co and b is 0.15 to 0.25;
M¹ is Ir and b is 0.15 to 0.25;
M¹ is Ce and b is 0.15 to 0.25; or
M¹ is Nb and b is 0.15 to 0.3.

9. The catalyst of any of claims 1 to 8, wherein the catalyst is selected from RuₐNb_{b}Oₓ, RuₐCo_{b}Nb_{c}Oₓ, RuₐCo_{b}Oₓ, RuₐMn_{b}Oₓ, RuₐFe_{b}Mn_{c}Oₓ, RuₐFe_{b}Mn_{c}Ni_{d}Oₓ, RuₐNi_{b}Oₓ, RuₐMo_{b}Oₓ, or RuₐIr_{b}Oₓ, and wherein a, b, c and d are as defined in any of claims 1 to 8.

10. The catalyst of any of claims 1 to 9, wherein x is a number from 1 to 3.

11. A catalyst coated membrane, comprising a membrane coated with a catalyst according to any of claims 1 to 10.

12. A method of making and activating a catalyst coated membrane according to claim 11, the method comprising the following steps in order:
(i) forming an anode catalyst powder, comprising a catalyst according to any of claims 1 to 10;
(ii) dispersing the anode catalyst powder in a mixture comprising a solvent and an ionomer to produce an anode catalyst ink;
(iii) spraying the anode catalyst ink onto a first side of a desired membrane to produce an anode catalyst layer on the first side of the membrane;
(iv) applying a cathode catalyst onto a second side of the membrane to produce a cathode catalyst layer on the second side of the membrane; and
(v) immersing the catalyst coated membrane in deionised water or an acidic solution for an extended period of time;
wherein the ionomer present in step (ii) may be a material of the membrane in step (iii), and wherein the second side of the membrane is opposite to the first side of the membrane.

13. A membrane electrode assembly, comprising a catalyst coated membrane according to claim 11.

14. A membrane electrode assembly according to claim 13, wherein the membrane electrode assembly comprises the following elements, in order:
(i) an anode;
(ii) a first porous transport layer (PTL) adjacent to a first side of a catalyst coated membrane;
(iii) a catalyst coated membrane according to claim 11 having a first side and a second side;
(iv) a second porous transport layer (PTL) adjacent to a second side of the catalyst coated membrane; and
(v) a cathode;
wherein the first side of the catalyst coated membrane is coated with a catalyst of the invention, and wherein the first side of the catalyst coated membrane faces the anode, and the second side of the catalyst coated membrane faces the cathode.

15. A method of hydrogen production via proton exchange membrane (PEM)-based water electrolysis, the method comprising using a catalyst according to any of claims 1 to 10, a catalyst coated membrane according to claim 11 and/or a membrane electrode assembly according to claim 13 or claim 14.
